# EUROPEAN PATENT SPECIFICATION

(11) **EP 3 291 694 B1**
(45) Date of publication and mention of the grant of the patent: **29.07.2020**
(21) Application number: 16722568.9
(22) Date of filing: 28.04.2016
(51) Int. Cl.: A23P 20/00

(54) **SYSTEM AND METHOD FOR FOOD PROCESSING**
SYSTEM UND VERFAHREN ZUR LEBENSMITTELVERARBEITUNG
SYSTÈME ET PROCÉDÉ DE PRÉPARATION D'ALIMENTS

(30) Priority: 04.05.2015 EP 15166200
(43) Date of publication of application: 14.03.2018
(73) Proprietor: Société des Produits Nestlé S.A., 1800 Vevey (CH)
(72) Inventor: AIT BOUZIAD, Youcef, 1026 Echandens (CH)
(74) Representative: Navarro Fernández, Maria Isabel
(86) International application number: PCT/EP2016/059534
(87) International publication number: WO 2016/177628

(56) References cited:
- WO-A1-2014/190217
- CN-A- 103 932 368
- US-A1- 2014 154 378
- US-B1- 6 280 785

## Description

### Field of the invention

The present invention is directed to a system for processing food departing from raw base materials, typically dry, and providing cooked food. The invention further relates to a method for processing food in such a system.

### Background of the invention

At present, processed food is becoming more and more widely used in the pursit of saving time and efforts. However, the perception of processed food that many people have is that it is not sufficiently healthy and is not adequate for each person's needs. Therefore, present trends of processed foods require that it is made more healthy and adapted to each individual's needs, that it is more convenient and the least number of processing operations is required from the consumer and, even more, that the wate is minimised so only the quantity of food to be consumed is ideally prepared.

Currently, known processed foods are bought totally raw or partially cooked and need to be cooked at home by using traditional cooking devices, such as frying devices, microwaves, ovens or the like. The drawbacks of these standard solutions are that, on one side, the food bought is not adapted to the consumer's needs and, on the other side, the consumer has to still process and cook the food at home, so the complete process requires time, further devices and the result is not always satisfactory, which makes the whole process not convenient.

A possibility for preparing tailored food adapted to each individual's needs would be to directly configure, departing from raw ingredients, the food that will be further cooked into a ready-to-eat meal. Some of the solutions known in the state of the art are able to provide systems that can configure the raw meal, but these systems are not able to cook it in the same device, so they need a further processing step: this is cumbersome and not convenient for the consumer and the final result of the meal is not always satisfactory, as different food components arranged in different parts of the meal should be cooked differently, which is not the case with the know home-appliances or would require further devices for specific cooking and a very long processing time. Moreover, a non-adequate cooking would destroy many properties of the meal so processed, therefore making the final result meal not at all satisfactory.

Some of the documents of the prior art show, as already disclosed, systems able to print food according to certain preferences and parameters, but are not able to cook the so prepared raw food. For example, document WO 2010/151202 A1, belonging to Electrolux, discloses a food printer for making 2D and 3D food dimensional shapes of food and binder: a printer head prints small drops of the food and the binder while moving to build the 2D or 3D dimensional shape. Shaping and configuring special 2D and 3D food shapes is disclosed, but no cooking of this food is possible. Similarly, documents CN 104097405 or CN 103932368 disclose systems able to print tailored food but which are not able to further cook this food and provide a cooked meal.

Document WO 2014/190217 A1 of the prior art discloses, for example, a dry product and liquid that are combined and mixed together in a mixing chamber of a mixing module comprising a piston to deliver the mixture to a dispensing pump and a blender to mix the product and a motor moving the blender. When the mixture is prepared, it goes into a 3D dispenser depositing the food paste in a heated bed: the dispenser can move in X, Y and Z directions. For cooking, deposited food can begin being cooked as soon as it is deposited on the heated bed or, once all food has been deposited, an automatic cover creates an enclosed heated chamber having Kapton heaters embedded with the bed to provide a functional oven.

Other trends known in the prior art, particularly relating to 3D printing of food products in more or less complex shapes, print for example sugar or confectionary food products, but do not cook any of the printed food objects: documents US 2014/0154378 A1 or WO 2014/193226 A1 disclose exemplary systems of that.

The present invention aims at providing a full and completely automatic food processing system, convenient and very easy to use, able to provide a wide range of recipes adapted to each individual's needs, departing from raw base materials and dispensing delicious and healthy ready-to-eat cooked meals.

The present invention comes to solve the above-described problems, as it will be further explained. The invention also aims at other objects and particularly the solution of other problems as will appear in the rest of the present description.

### Object and summary of the invention

According to a first aspect, the invention relates to a food processing system comprising:
- one or a plurality of food containers each comprising a raw food product;
- one or a plurality of dispensing and reconstituting chambers each linked to at least one of the food containers, the dispensing and reconstituting chambers receiving the raw food product from the food containers, processing it by hydration and/or texturization, and selectively depositing it in one or a plurality of shapes and/or layers;
- cooking means configured to selectively heat or not parts of the deposited shapes and/or layers.

Preferably, the dispensing and reconstituting chambers are configured to dispense a food product simultaneously or sequentially from one or more of the food containers, configuring one shape and/or layer in directions (X, Y, Z) and a plurality of shapes and/or layers in directions (X, Y, Z).

Typically, the dispensing and reconstituting chambers comprise heating means that can be selectively activated to heat and/or pre-heat the processed food product.

According to the invention, the cooking means are configured to simultaneously and/or selectively be activated and/or deactivated to cook first one shape and/or layer in directions (X, Y, Z) and then further shapes and/or layers in directions (X, Y, Z).

The dispensing and reconstituting chambers in the system of the invention are configured to be able to move in one or a plurality of directions (X, Y, Z) relative to the area where the food product is deposited.

According to the invention, it is also possible that the cooking means are able to move in one or a plurality of directions (X, Y, Z) relative to the area where the food product is deposited. Also, the area where the food product is deposited can be configured to be able to move in one or a plurality of directions (X, Y, Z) relative to the dispensing and reconstituting chambers and/or relative to the cooking means.

Typically, the cooking means comprise one or a plurality of means based on conduction, convection and/or radiation. The cooking means preferably comprise surface cooking means and/or core cooking means at adequate wavelengths.

According to the invention, the food processing system can further comprise control means configured to receive the information on the product to prepare, choose the recipe for the preparation of said product and activate the necessary cooking means.

Typically, the dry or partially dry food material is configured as dough or as powder.

According to a third aspect, the invention relates to a method for processing food in a food processing system as the one described, the method comprising the steps of:
- selectively depositing texturized and/or hydrated raw food from one or a plurality of food containers into a first shape and/or layer by means of one or a plurality of dispensing and reconstituting chambers and/or the area where the food product is deposited moving in directions (X, Y, Z) with respect to each other;
- moving in directions (X, Y, Z) one or a plurality of dispensing and reconstituting chambers and/or the area where the food product is deposited with respect to each other, to configure a plurality of shapes and/or layers; and
- activating or not cooking means to first selectively heat parts of one shape and/or layer in directions (X, Y, Z) and later further shapes and/or layers configured in directions (X, Y, Z).

Preferably, in the method of the invention, the preparation of the product is done receiving the information on the product to prepare, choosing the recipe for the preparation of said product and activating the necessary cooking means.

Typically, the cooking means can activate one or a plurality of means based on conduction, convection and/or radiation.

In the method of the invention, the cooking means preferably comprise at least surface cooking means and core cooking means at adequate wavelengths.

### Brief description of the drawings

Further features, advantages and objects of the present invention will become apparent for a skilled person when reading the following detailed description of embodiments of the present invention, when taken in conjunction with the figures of the enclosed drawings.
- Fig. 1: shows a general schematic view of the main components of a food processing system according to the present invention.
- Fig. 2: shows a general schematic view of the preparation zone and of the deposition and cooking zone in a food processing system according to the present invention.
- Fig. 3: shows a very schematic overview of the different possible food containers and reconstituting and dispensing chambers operating in a food processing system of the invention, as the one represented in Figure 1.
- Fig. 4: shows a typical possible configuration of an infrared heating module in a food processing system according to the present invention.
- Figs. 5a-g: show the simulation of different antennas created by a microwave module in a food processing system according to the present invention, where air gaps having different dimensions are used.

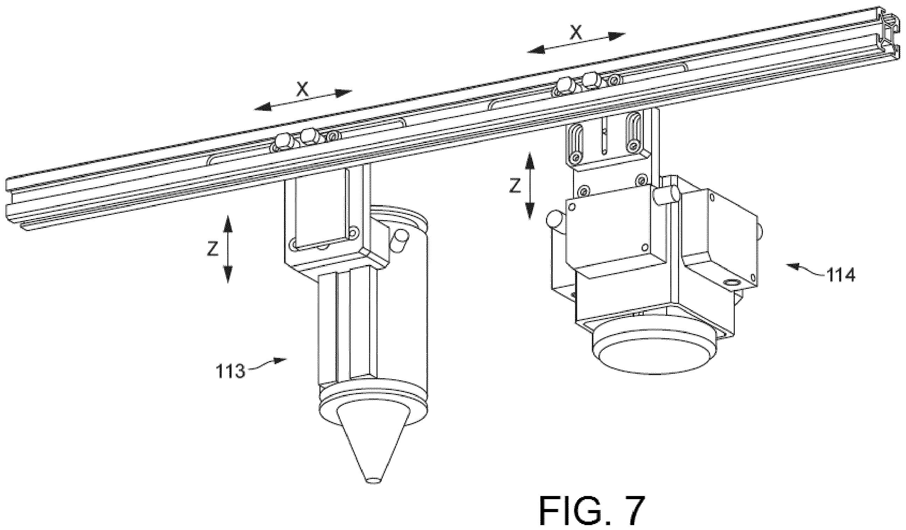

- Figs. 6-7: show in more detail the heating in a food processing system according to the present invention, particularly an infrared heating module and a microwave module.

### Detailed description of exemplary embodiments

The present invention is directed to a system 100 for processing food departing from different raw base materials, typically dry or partially dry, preferably provided as powder or as dough, the system providing final prepared cooked food.

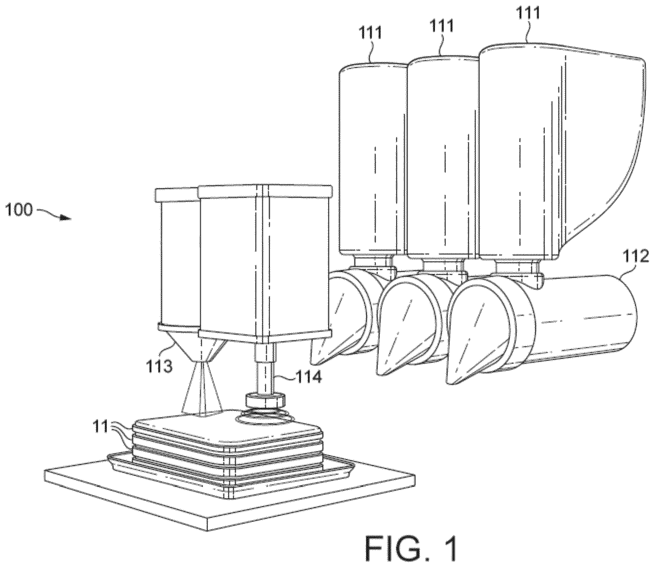

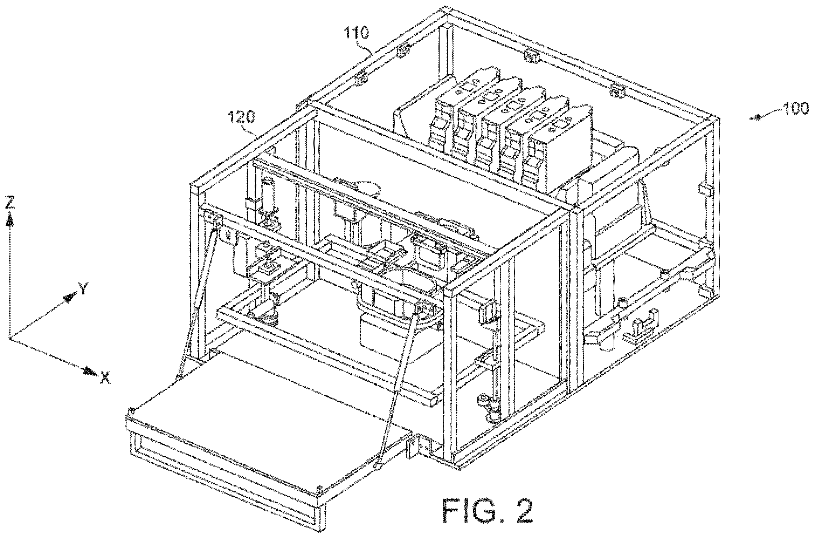

As represented schematically in Figure 1 in conjunction with Figure 2, the system 100 of the invention typically comprises two main functional zones or areas: a preparation zone 110, where the raw materials, typically dry or partially dry, are stored and further reconstituted and/or texturized, as it will be further explained in detail, and a deposition and cooking zone 120 where these raw ingredients, once having been reconstituted and/or texturized, are deposited into a plurality of different food product shapes or layers 11, these shapes or layers 11 being later cooked.

When talking about shapes, the invention aims at covering different layered volume surfaces created by the deposition of food material: this should be understood by shapes and/or layers (layers understood as more planar surfaces) in what follows in the rest of the description.

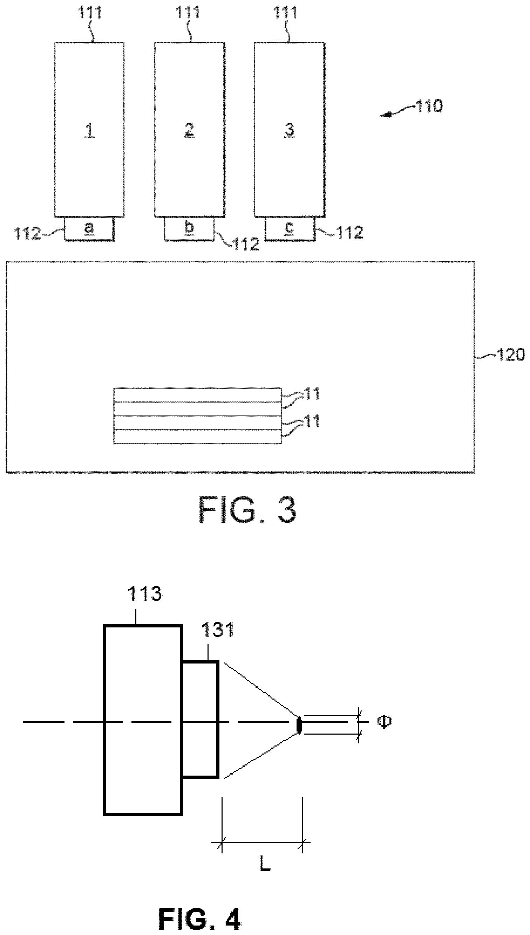

As shown in Figure 1, the different raw materials are stored in a plurality of food containers 111: Figure 3 shows for example three food containers 111, marked with references 1, 2 and 3. According to a possible embodiment of the invention, food container 1 can comprise for example a base material arranged as a dough or as powder, food container 2 can comprise a dry vegetable additive and container 3 can comprise a dry protein additive, for example. The number of food containers 111 represented for example in Figure 1 or in Figure 3 is simply exemplary: another possible embodiment is represented in Figure 2, where five food containers 111 are shown and two additional containers (not shown) are typically also comprised in the system, having condiments (salt, pepper, other kind of species or specific condiments, etc.). Typically, five food containers 111 plus two containers for the additives will provide a very wide variety of recipes available in the system.

In this embodiment, the base dough or powder material provided in food container 1 can be for example starch made of cereals, wheat, rice or potato base. The dry vegetable additive in container 2 can comprise minerals, vitamins or the like while food container 3 will add dry proteins. In the example disclosed, the base food material will be provided by cointainer 1 (as powder or dough) while flavours will be provided by containers 2 and 3 (vegetable and protein additives).

As schematically represented in Figure 1, each food container 111 is linked to a reconstituting and dispensing chamber 112: in Figure 3, each food container under reference 1, 2, 3 is connected to a reconstituting and dispensing chamber marked as a, b and c, respectively. The product in each of the food containers 111, dry or partially dry, is delivered into a reconstituting and dispensing chamber 112 where it is hydrated and texturized, typically to configure a paste-type food material. Further, each reconstituting and dispensing chamber comprises suitable means for delivering this paste-type material in an appropriate container arranged in the deposition and cooking zone 120. It is also possible and comprised within the scope of the present invention that one reconstituting and dispensing chamber is linked or connected to more than one food container 111.

Preferably, according to the invention, the reconstituting and dispensing chambers 112 can comprise heating means to also be able to heat and/or pre-heat the food components inside them: particularly, the food components that solidify are the ones being typically heated and/or pre-heated (i.e., having the need to be heated) in the reconstituting and dispensing chambers 112. The heating is largely done between temperatures varying up to 100° C and can be done by any known heating or pre-heating means.

For depositting the texturized and/or hydrated food material, the reconstituting and dispensing chambers 112 typically move in one or more directions X, Y, Z relative to the deposition area typically configured as a tray or similar: both parts, the reconstituting and dispensing chambers 112 and the deposition area can move, or one can move relative to the other, depending on the recipe targeted. The different product shapes or layers 11 are typically configured by the deposition area and/or the reconstituting and dispensing chambers 112 moving relative to each other in any direction X, Y, Z, so that food material shapes and/or layers can be formed (see for example Figure 1).

With such configuration, the system 100 of the invention is able to configure and tailor food products according to a wide variety of stored recipes: that is to say, different food components (coming from different reconstituting and dispensing chambers that can or not be simultaneously activated and which provide different materials coming from different food containers) are deposited as desired in the deposition area, so different shapes and/or layers 11 in any direction X, Y, Z can be configured and, on top of that, for each single shape or layer 11, different food componets are possible in each of its parts. This represents a primary advantage of the system of the invention as, according to each individual's needs, tailored food can be configured by the system 100, according to each person's profile. Even more, a same food recipe can be configured comprising different areas/zones, where each area/zone will be intended for consumption of a certain individual: so the system 100 will provide one meal for different members of a family, for example, such that different areas in that meal will be intended for different members as a function of their needs (depending on the age, the medical status, certain food restrictions or alergies, amount of calories, carbohydrates, fat, colesterol, etc.). It is Iso possible to configure, for example, a whole meal having different areas or zones but intended for one person's consumption: for example, an advantageous case will be a meal comprising different areas, each area configured as a first dish, second dish and dessert, for example. That is to say, an evolving meal will be thus configured within one unique meal prepared.

For this reason, the system 100 of the invention further comprises control means (not shown) which comprise a wide variety of recipes that can be selected by the system user, these control means governing the operation of the food containers 111 and of the reconstituting and dispensing chambers 112, as a function of the recipe having been previously selected. Typically, the control means will comprise a user interface where the user will be able to select different recipes and also configure a tailored meal, as well as a meal for a whole family, comprising different areas, or as a meal for self consumption, however comprising different areas or zones too, as previously explained. These control means in the system 100 of the invention are configured to receive the information on the product to prepare, choose the recipe for the preparation of said product and activate the necessary cooking means in order to prepare the product.

Besides, the system 100 of the invention is configured to further cook the deposited food material on the deposition area, preferably by shapes and/or layers 11: therefore, each time one shape or layer 11 has been configured and deposited, cooking means can be selectively activated to cook the deposited shape or layer (or can be not activated so that the shape or layer is not cooked at all, or it can be cooked in certain parts and not cooked in others), as it will be further explained in more detail now.

As it will be further explained, the cooking in the system 100 is done by cooking and/or heating means of two types: typically surface cooking means and core cooking means. Both types of cooking means, only one or none can be selectively activated each time a layer and/or shape 11 has been deposited in the corresponding deposition area, so that it can be cooked and/or heated consequently. The heating and/or cooking effects (particularly with respect to core or surface types of heating) generally depend on two factors: the power of the heating or cooking source and the coefficient of absorption of the medium to which the heating or cooking source is applied. Typically, when the coefficient of absorption of the medium is high, and the applied energy density is also high, the surface of the medium is cooked, typically grilled. On the other hand, when the coefficient of absorption of the medium is low and the applied energy density is also low, the cooking is done in depth, i.e. penetrates on the core of the medium. Theoretical studies are known for cases where water is the medium, which can be extrapolated to food, as most of the food products comprise high proportions of water.

According to the invention, the surface cooking means that can be used will be typically selected from: a broiler element, hot air convection and/or infrared radiation means with adequate wavelength. Typically, the broiler element and the hot air convection heat the cavity and the surface of the medium, whereas the infrared radiation means are more localized and heat the surface of the medium only.

For core cooking means, the present invention will typically use infrared radiation means at appropriate wavelength and/or microwave means, either using a magnetron or solid state microwaves.

The preferred embodiment according to the invention will be to use infrared radiation means at appropriate wavelength so that they heat the surface of the shape or layer 11 and microwave means for heating the core of the shape or layer 11. The infrared radiation means can also be configured to comprise a halogen infrared module at a medium-high wavelength intended for surface cooking and a laser cooking module for example, at a low wavelength to cook the core of the shapes or layers 11. In fact, the cooking means of the invention can be configured as desired, further varying their wavelengths, to be able to make them heat and/or cook the surface or the core of the shapes or layers 11.

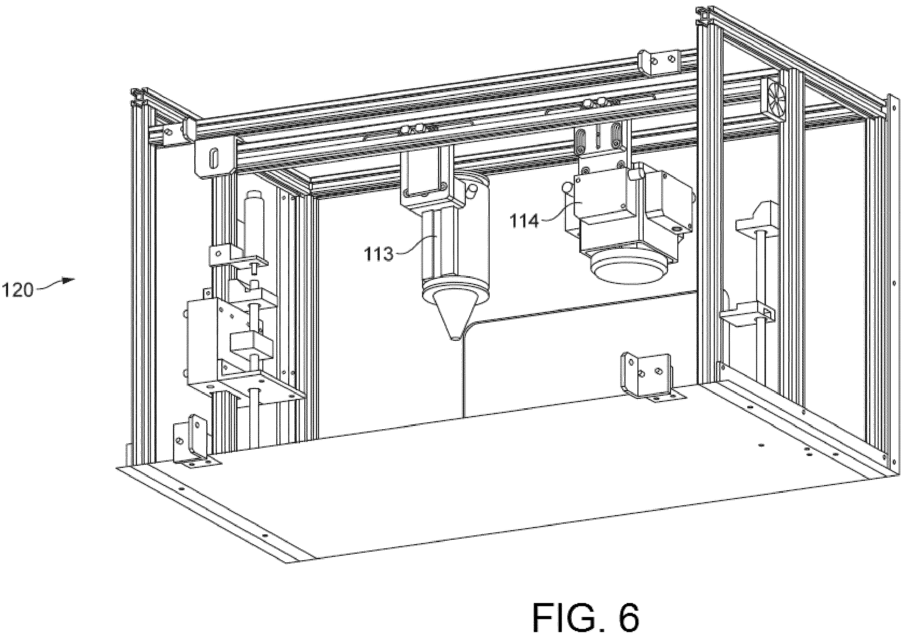

According to one embodiment of the invention, the cooking means of the system 100 comprise, as schematically shown in Figure 6, an infrared heating module 113 with appropriate wavelength intended to do surface heating/cooking of the layered product and a microwave module 114, preferably a nearfield microwave module, intended to do depth/core heating of the layered product The control means will also command these heating modules such that they can be simultaneously activated or one being activated while the other one is turned off or both modules being turned off at the same time, so no cooking is done. Furthermore, the infrared heating module 113 and the microwave module 114 can also move in one or a plurality of directions X, Y, Z with respect to the deposition area, so that different and specific parts or areas in the shapes and/or layers 11 can be cooked differently. It is also possible that it is the deposition area which moves in any of directions X, Y, Z with respect to the cooking means, or that bot, the cooking means and the deposition area move. Again, it is clear that a very wide range of combinations of cooking is possible: this, added to the wide possibilities for configuring the food materials (raw) gives as a result extremely wide and open possibilities for configuring different meals. Moreover, the cooking done with the system of the invention makes it possible to efficiently cook in the most adequate way each shape or layer 11, and each part or area within each one of the shapes or layers 11, so the result is that each part of the meal is prepared in the most convenient and efficient manner in only one single device, something not possible in any of the systems of the known prior art.

Figure 4 shows an exemplary focal point in a typical configuration used in an infrared heating module 113 in a system 100. Preferably, the infrared heating module 113 comprises a halogen lamp of 150 W and 17V, having a reflector 131 to configure the focal point or infrared heating spot at a certain distance L and having a certain diameter Φ. The configuration of the infrared heating module 113 will be such that the values of the diameter and of the length L will be determined according to the system needs. Typically, values will be of diameter of 20 mm, more preferably of 10 mm, even more preferably of 6 mm, at a distance L comprised between 30 mm and 60 mm, though other preferred values can also be used in the system of the invention.

According to the invention, the infrared heating module 113 will be configured so that the infrared spot covers the part of the shape or layer 11 to be cooked in a reasonable time and with the desired precision, always with the requirement that the heating or cooking spot is not bigger than the dispensing are where the food product is arranged and cooked.

Typically, the microwave module 114 used in the system 100 of the invention is configured as near field applicator, preferably provided with a magnetron of 2,45 GHz, 150 W of power. This configuration allows cooking the food product in depth, and is typically adapted not to heat beyond approximately 1 cm, so the layers 11 will typically have a thickness not bigger than 1 cm, as a preferred configuration. However, other different food product configurations and thicknesses are also possible according to the system of the present invention.

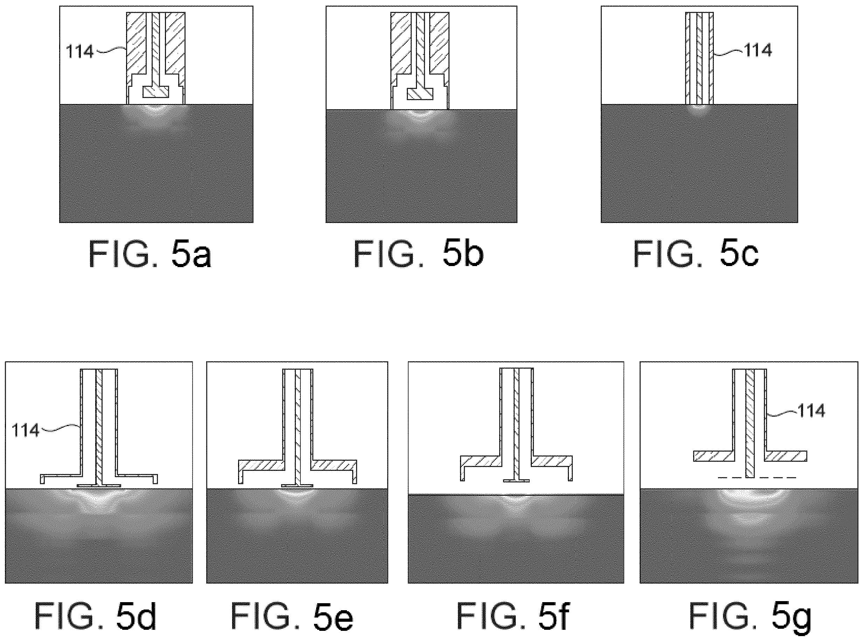

Figures 5a to 5g represent the simulation of different antennas provided by a microwave module 114 as the one previously described, under different conditions:
- Figure 5a corresponds to a giga-meter field applicator, and no air gap, the heating spot having a diameter of 14 mm and getting in depth to 5 mm;
- Figure 5b corresponds to a giga-meter field applicator, with an air gap of 1 mm, the heating spot having a diameter of 14 mm and getting in depth to 5 mm;
- Figure 5c corresponds to an open coaxial line, with an air gap of 1 mm, the heating spot having a diameter of 8 mm and getting in depth to 2,5 mm;
- Figure 5d corresponds to a patch antenna of 20 mm diameter, and an air gap of 1 mm, the heating spot having a diameter of 22 mm and getting in depth to 10 mm;
- Figure 5e corresponds to a patch antenna of 12 mm diameter, and an air gap of 1 mm, the heating spot having a diameter of 15 mm and getting in depth to 6 mm;
- Figure 5f corresponds to a patch antenna of 12 mm diameter, and an air gap of 5 mm, the heating spot having a diameter of 14 mm and getting in depth to 5 mm;
- Figure 5g corresponds to a helix antenna of 12 mm diameter, and an air gap of 5 mm, the heating spot having a diameter of 30 mm and getting in depth to 8 mm.

The heating spot in the simulation of Figure 5c is too small for what a system according to the present ivention would need, similar to cases shown in Figures 5a and 5b. Antenna solutions as simulated in Figures 5d or 5g provide a high depth together with high heating spot diameters, so preferred heating spots and controlled cooking and heating occurs with the antenas simulated for example in Figures 5e and 5f, though it is clear that the microwave module can be configured as the desired values for heating spot diameter covered and for depth heating are targeted. Again, these configurations would be a compromise between the depth cooking targeted and the amount of time depending on the heating spot diameter (the smaller the spot, the higher the time).

The invention further relates to a method for processing food in a food processing system 100 as the one described previously. The method comprises the following steps, comanded by the control means:
a) once the food containers 111 are put on place, they dispense the raw food product comprised in them into the corresponding reconstituting and dispensing chamber 112 (one or more), where this raw material is reconstituted and/or texturized and/or hydrated, typically to configure a kind of a pasta-type-food product;
b) the reconstituted food product so configured is then dispensed in a customized way according to the recipe targeted into a deposition area into a first shape and/or layer, such that this shape or layer can comprise different areas/zones made of different food materials/ingredients if desired;
c) once a first shape and/or layer has been deposited, cooking of this shape or layer by appropriate cooking means starts: one or more of the cooking techniques previously described are used, either sequentially or simultaneously, though it is also possible that no cooking means are for example activated in a certain part of the layer or in all the complete shape or layer;
d) another shape or layer is deposited, as per step b);
e) cooking of the new shape or layer deposited is made, as per step c);
f) repetition of steps d) and e)a plurality of times, depending on the recipe/product/meal targeted.

As already described in what preceeds, some of the advantages of the food processing system according to the invention are:
- everything, from raw material reconstitution, texturization and/or hydration, dispensing and cooking is done using one single system;
- the comanding of the system is automatic and done by adequate control means, preferably by minimum interaction of the consumer;
- the configuratoion of the food products / meals is customized according to each individual's needs;
- the cooking is done by zones within one shape or layer and differently between shapes or layers, so cooking is optimum and customized;
- a large diversity of meals and recipes is possible, all with a very high quality;
- new mouth feelings on a single meal (crunchy, soft, foamed, congealed, etc.) are even possible.

## Claims

1. Food processing system (100) comprising:
- one or a plurality of food containers (111) each comprising a raw food product;
- one or a plurality of dispensing and reconstituting chambers (112) each linked to at least one of the food containers (111), the dispensing and reconstituting chambers (112) receiving the raw food product from the food containers (111), processing it by hydration and/or texturization, and selectively depositing it in one or a plurality of shapes and/or layers (11);
**characterized in that** the food processing system (100) further comprises cooking means configured to selectively heat or not parts of the deposited shapes and/or layers (11).

2. Food processing system (100) according to claim 1, wherein the dispensing and reconstituting chambers (112) are configured to dispense a food product simultaneously or sequentially from one or more of the food containers (111), configuring one shape and/or layer (11) in directions (X, Y, Z) and a plurality of shapes and/or layers in directions (X, Y, Z).

3. Food processing system (100) according to any of claims 1-2, wherein the dispensing and reconstituting chambers (112) comprise heating means that can be selectively activated to heat and/or pre-heat the processed food product.

4. Food processing system (100) according to any of the previous claims, wherein the cooking means are configured to simultaneously and/or selectively be activated and/or deactivated to cook first one shape and/or layer in directions (X, Y, Z) and then further shapes and/or layers in directions (X, Y, Z).

5. Food processing system (100) according to any of the previous claims, wherein the dispensing and reconstituting chambers (112) are configured to be able to move in one or a plurality of directions (X, Y, Z) relative to the area where the food product is deposited.

6. Food processing system (100) according to any of the previous claims, wherein the cooking means are configured to be able to move in one or a plurality of directions (X, Y, Z) relative to the area where the food product is deposited.

7. Food processing system (100) according to any of the previous claims, wherein the area where the food product is deposited is configured to be able to move in one or a plurality of directions (X, Y, Z) relative to the dispensing and reconstituting chambers (112) and/or relative to the cooking means.

8. Food processing system (100) according to any of the previous claims, wherein the cooking means comprise one or a plurality of means based on conduction, convection and/or radiation.

9. Food processing system (100) according to any of the previous claims, wherein the cooking means comprise cooking means and/or core cooking means at adequate wavelengths.

10. Food processing system (100) according to any of the previous claims, further comprising control means configured to receive the information on the product to prepare, choose the recipe for the preparation of said product and activate the necessary cooking means.

11. Method for processing food in a food processing system (100) according to any of claims 1-10, comprising the steps of:
- selectively depositing texturized and/or hydrated raw food from one or a plurality of food containers (111) into a first shape and/or layer (11) by means of one or a plurality of dispensing and reconstituting chambers (112) ;
- moving in directions (X, Y, Z) one or a plurality of dispensing and reconstituting chambers (112) and/or the area where the food product is deposited with respect to each other, to configure a plurality of shapes and/or layers (11); and
- activating or not cooking means to first selectively heat parts of one shape and/or layer in directions (X, Y, Z) and later further shapes and/or layers configured in directions (X, Y, Z).

12. Method according to claim 11 wherein the preparation of the product is done receiving the information on the product to prepare, choosing the recipe for the preparation of said product and activating the necessary cooking means.

13. Method according to any of claims 11-12 wherein the cooking means can activate one or a plurality of means based on conduction, convection and/or radiation.

14. Method according to any of claims 11-13 wherein the cooking means comprise at least surface cooking means and core cooking means at adequate wavelengths.

## Patentansprüche

1. Lebensmittelverarbeitungssystem (100), umfassend:
- einen oder eine Vielzahl von Lebensmittelbehältern (111), jeweils umfassend ein unzubereitetes Lebensmittelprodukt;
- eine oder eine Vielzahl von Abgabe- und Rekonstitutionskammern (112), die jeweils mit mindestens einem der Lebensmittelbehälter (111) verbunden sind, wobei die Abgabe- und Rekonstitutionskammern (112) das unzubereitete Lebensmittelprodukt aus den Lebensmittelbehältern (111) aufnehmen, es durch Hydrierung und/oder Texturierung verarbeiten und es wahlweise in einer oder einer Vielzahl von Formen und/oder Schichten (11) ablegen;
**dadurch gekennzeichnet, dass** das Lebensmittelverarbeitungssystem (100) ferner ein Kochmittel umfasst, das dazu konfiguriert ist, Teile der abgelegten Formen und/oder Schichten (11) wahlweise zu erhitzen oder nicht zu erhitzen.

2. Lebensmittelverarbeitungssystem (100) nach Anspruch 1, wobei die Abgabe- und Rekonstitutionskammern (112) dazu konfiguriert sind, ein Lebensmittelprodukt gleichzeitig oder nacheinander aus einem oder mehreren der Lebensmittelbehälter (111) abzugeben, wobei eine Form und/oder Schicht (11) in Richtungen (X, Y, Z) und eine Vielzahl von Formen und/oder Schichten in Richtungen (X, Y, Z) konfiguriert werden.

3. Lebensmittelverarbeitungssystem (100) nach einem der Ansprüche 1 bis 2, wobei die Abgabe- und Rekonstitutionskammern (112) ein Heizmittel umfassen, das wahlweise aktiviert werden kann, um das verarbeitete Lebensmittelprodukt zu erhitzen und/oder vorzuerhitzen.

4. Lebensmittelverarbeitungssystem (100) nach einem der vorstehenden Ansprüche, wobei das Kochmittel dazu konfiguriert ist, gleichzeitig und/oder wahlweise aktiviert und/oder deaktiviert zu werden, um erst eine Form und/oder Schicht in Richtungen (X, Y, Z) und danach weitere Formen und/oder Schichten in Richtungen (X, Y, Z) zu kochen.

5. Lebensmittelverarbeitungssystem (100) nach einem der vorstehenden Ansprüche, wobei die Abgabe- und Rekonstitutionskammern (112) dazu konfiguriert sind, sich in eine oder eine Vielzahl von Richtungen (X, Y, Z) in Bezug auf den Bereich bewegen zu können, in dem das Lebensmittelprodukt abgelegt wird.

6. Lebensmittelverarbeitungssystem (100) nach einem der vorstehenden Ansprüche, wobei das Kochmittel dazu konfiguriert ist, sich in eine oder eine Vielzahl von Richtungen (X, Y, Z) in Bezug auf den Bereich bewegen zu können, in dem das Lebensmittelprodukt abgelegt wird.

7. Lebensmittelverarbeitungssystem (100) nach einem der vorstehenden Ansprüche, wobei der Bereich, in dem das Lebensmittelprodukt abgelegt wird, dazu konfiguriert ist, sich in eine oder eine Vielzahl von Richtungen (X, Y, Z) in Bezug auf die Abgabe- und Rekonstitutionskammern (112) und/oder in Bezug auf das Kochmittel bewegen zu können.

8. Lebensmittelverarbeitungssystem (100) nach einem der vorstehenden Ansprüche, wobei das Kochmittel ein oder eine Vielzahl von Mitteln basierend auf einer Wärmeleitung, Konvektion und/oder Strahlung umfasst.

9. Lebensmittelverarbeitungssystem (100) nach einem der vorstehenden Ansprüche, wobei das Kochmittel ein Kochmittel und/oder ein Kernkochmittel mit geeigneten Wellenlängen umfasst.

10. Lebensmittelverarbeitungssystem (100) nach einem der vorstehenden Ansprüche, ferner umfassend ein Steuermittel, das dazu konfiguriert ist, die Information über das Produkt zum Zubereiten zu empfangen, das Rezept für die Zubereitung des Produkts auszuwählen und das notwendige Kochmittel zu aktivieren.

11. Verfahren zum Verarbeiten von Lebensmitteln in einem Lebensmittelverarbeitungssystem (100) nach einem der Ansprüche 1 bis 10, umfassend die Schritte:
- wahlweises Ablegen eines texturierten und/oder hydrierten unzubereiteten Lebensmittels aus einem oder einer Vielzahl von Lebensmittelbehältern (111) in einer ersten Form und/oder Schicht (11) mittels einer oder einer Vielzahl von Abgabe- und Rekonstitutionskammern (112);
- Bewegen in Richtungen (X, Y, Z) von einer oder einer Vielzahl von Abgabeund Rekonstitutionskammern (112) und/oder des Bereichs, in dem das Lebensmittelprodukt abgelegt wird, in Bezug aufeinander, um eine Vielzahl von Formen und/oder Schichten (11) zu konfigurieren; und
- Aktivieren oder Nichtaktivieren von einem Kochmittel, um zunächst wahlweise Teile einer Form und/oder Schicht in Richtungen (X, Y, Z) und spätere weitere konfigurierte Formen und/oder Schichten in Richtungen (X, Y, Z) zu erhitzen.

12. Verfahren nach Anspruch 11, wobei die Zubereitung des Produkts vorgenommen wird, indem die Information über das Produkt zum Zubereiten empfangen wird, das Rezept für die Zubereitung des Produkts ausgewählt wird und das notwendige Kochmittel aktiviert wird.

13. Verfahren nach einem der Ansprüche 11 bis 12, wobei das Kochmittel ein oder eine Vielzahl von Mitteln basierend auf einer Wärmeleitung, Konvektion und/oder Strahlung aktivieren kann.

14. Verfahren nach einem der Ansprüche 11 bis 13, wobei das Kochmittel mindestens ein Oberflächenkochmittel und Kernkochmittel mit geeigneten Wellenlängen umfasst.

## Revendications

1. Système de traitement d'aliments (100) comprenant :
- un ou une pluralité de récipients alimentaires (111) comprenant chacun un produit alimentaire cru ;
- une ou une pluralité de chambres de distribution et de reconstitution (112) reliées chacune à au moins l'un des récipients alimentaires (111), les chambres de distribution et de reconstitution (112) recevant le produit alimentaire cru depuis les récipients alimentaires (111), le traitant par hydratation et/ou texturation, et le déposant sélectivement dans une ou une pluralité de formes et/ou couches (11) ;
**caractérisé en ce que** le système de traitement d'aliments (100) comprend en outre des moyens de cuisson configurés pour chauffer sélectivement ou non des parties des formes et/ou couches déposées (11).

2. Système de traitement d'aliments (100) selon la revendication 1, dans lequel les chambres de distribution et de reconstitution (112) sont configurées pour distribuer un produit alimentaire simultanément ou séquentiellement depuis un ou plusieurs des récipients alimentaires (111), en configurant une forme et/ou couche (11) dans des directions (X, Y, Z) et une pluralité de formes et/ou couches dans des directions (X, Y, Z).

3. Système de traitement d'aliments (100) selon l'une quelconque des revendications 1 ou 2, dans lequel les chambres de distribution et de reconstitution (112) comprennent des moyens de chauffage qui peuvent être activés sélectivement pour chauffer et/ou préchauffer le produit alimentaire traité.

4. Système de traitement d'aliments (100) selon l'une quelconque des revendications précédentes, dans lequel les moyens de cuisson sont configurés pour être simultanément et/ou sélectivement activés et/ou désactivés pour cuire d'abord une forme et/ou couche dans des directions (X, Y, Z) puis des formes et/ou couches supplémentaires dans des directions (X, Y, Z).

5. Système de traitement d'aliments (100) selon l'une quelconque des revendications précédentes, dans lequel les chambres de distribution et de reconstitution (112) sont configurées pour pouvoir se déplacer dans une ou une pluralité de directions (X, Y, Z) par rapport à la zone où le produit alimentaire est déposé.

6. Système de traitement d'aliments (100) selon l'une quelconque des revendications précédentes, dans lequel les moyens de cuisson sont configurés pour pouvoir se déplacer dans une ou une pluralité de directions (X, Y, Z) par rapport à la zone où le produit alimentaire est déposé.

7. Système de traitement d'aliments (100) selon l'une quelconque des revendications précédentes, dans lequel la zone où le produit alimentaire est déposé est configurée pour pouvoir se déplacer dans une ou une pluralité de directions (X, Y, Z) par rapport aux chambres de distribution et de reconstitution (112) et/ou par rapport aux moyens de cuisson.

8. Système de traitement d'aliments (100) selon l'une quelconque des revendications précédentes, dans lequel les moyens de cuisson comprennent un ou une pluralité de moyens à base de conduction, convection et/ou rayonnement.

9. Système de traitement d'aliments (100) selon l'une quelconque des revendications précédentes, dans lequel les moyens de cuisson comprennent des moyens de cuisson et/ou des moyens de cuisson à cœur à des longueurs d'onde adéquates.

10. Système de traitement d'aliments (100) selon l'une quelconque des revendications précédentes, comprenant en outre des moyens de commande configurés pour recevoir les informations concernant le produit à préparer, choisir la recette pour la préparation dudit produit et activer les moyens de cuisson nécessaires.

11. Procédé pour le traitement d'aliments dans un système de traitement d'aliments (100) selon l'une quelconque des revendications 1 à 10, comprenant les étapes consistant à :
- déposer sélectivement des aliments crus texturés et/ou hydratés depuis un ou une pluralité de récipients alimentaires (111) dans une première forme et/ou couche (11) au moyen d'une ou une pluralité de chambres de distribution et de reconstitution (112) ;
- déplacer dans des directions (X, Y, Z) une ou une pluralité de chambres de distribution et de reconstitution (112) et/ou la zone où le produit alimentaire est déposé les unes par rapport aux autres, pour configurer une pluralité de formes et/ou de couches (11) ; et
- activer ou non des moyens de cuisson pour d'abord chauffer sélectivement des parties d'une forme et/ou couche dans des directions (X, Y, Z) et plus tard d'autres formes et/ou couches configurées dans des directions (X, Y, Z).

12. Procédé selon la revendication 11 dans lequel la préparation du produit est faite en recevant les informations concernant le produit à préparer, en choisissant la recette pour la préparation dudit produit et en activant les moyens de cuisson nécessaires.

13. Procédé selon l'une quelconque des revendications 11 ou 12 dans lequel les moyens de cuisson peuvent activer un ou une pluralité de moyens à base de conduction, convection et/ou rayonnement.

14. Procédé selon l'une quelconque des revendications 11 à 13 dans lequel les moyens de cuisson comprennent au moins des moyens de cuisson en surface et des moyens de cuisson à cœur à des longueurs d'onde adéquates.
